# EUROPÄISCHE PATENTSCHRIFT

(11) **EP 2 417 368 B1**
(45) Veröffentlichungstag und Bekanntmachung des Hinweises auf die Patenterteilung: **17.08.2016**
(21) Anmeldenummer: 10710840.9
(22) Anmeldetag: 23.03.2010
(51) Int. Cl.: F16B 13/12, F16B 19/10

(54) **SPREIZNIETE**
EXPANDING RIVET
RIVET À EXPANSION

(30) Priorität: 09.04.2009 DE 102009002331; 09.04.2009 DE 102009002329
(43) Veröffentlichungstag der Anmeldung: 15.02.2012
(73) Patentinhaber: BSH Hausgeräte GmbH, 81739 München (DE)
(72) Erfinder: SCHLANDER, Ulrich, 89278 Nersingen (DE)
(86) Internationale Anmeldenummer: PCT/EP2010/053780
(87) Internationale Veröffentlichungsnummer: WO 2010/115708

(56) Entgegenhaltungen:
- WO-A1-2005/008154
- DE-A1-102007 009 692
- DE-C- 857 141
- FR-A- 1 309 246
- GB-A- 2 101 253

## Beschreibung

Die vorliegende Erfindung betrifft ein Kältegerät, insbesondere ein Haushaltskältegerät, mit einem durch wenigstens eine Spreizniete gehaltenen Einbauteil.

Aus WO2005/008154 A1 ist ein Haushaltskältegerät bekannt, bei dem ein Fachboden im Innern des Geräts über ein Trägerelement abgestützt ist, das in eine in die Wand des Geräts eingelassene Hülse eingeschoben ist. Eine Spitze des Trägerelements ist elastisch komprimierbar, um nach Passieren eines Engpasses in eine Aufweitung der Hülse einzugreifen. Das Trägerelement kann aus der Hülse jederzeit wieder herausgezogen werden.

Aufgabe der Erfindung ist, ein Kältegerät mit einer Spreizniete zu schaffen, die besonders zur Befestigung plattenförmiger Gegenstände geeignet ist.

Die Aufgabe wird gelöst durch ein Kältegerät mit den Merkmalen des Anspruchs 1. Am Wurzelabschnitt ist ein in einen den Stößel aufnehmenden inneren Hohlraum des Wurzelabschnitts gerichteter Vorsprung gebildet. Indem der Stößel an diesem Vorsprung verrastet, ist er gegen ein unbeabsichtigtes Herausziehen unter der Last des Einbauteils geschützt. Da der Stößel zum Passieren des Vorsprungs diesen zur Seite drängen muss, sorgt der Vorsprung auch für die zur Verankerung in der Aussparung benötigte Aufspreizung des Wurzelabschnitts.

Die sich gegenüberliegenden Oberflächen von Schaft und Stößel können einen plattenförmigen Gegenstand am Rand klemmen; vorzugsweise wird der Gegenstand an der Spreizniete befestigt, indem der Stößel eine Bohrung des Gegenstandes durchsetzt.

Zwischen dem Schaft und dem Wurzelabschnitt des Gehäuseteils kann ein Bund gebildet sein, der die Eindringtiefe des Wurzelabschnitts in die Aussparung der Wand unabhängig von deren Tiefe begrenzt. Dies macht es einfach, mit Hilfe mehrerer Spreiznieten ein plattenförmiges Einbauteil parallel zu der es tragenden Wand zu montieren.

Ein Ringflansch an einem vom Wurzelabschnitt abgewandten Ende des Schafts bildet eine ausgedehnte Anlagefläche für das zu montierende Einbauteil.

Ein elastisches, vorzugsweise schwingungsdämpfendes Element am vom Wurzelabschnitt abgewandten Ende des Schafts begrenzt die Übertragung von Körperschall zwischen dem Einbauteil und der Wand.

Um die Belastbarkeit des Schafts zu erhöhen, kann er mit außen abstehenden Rippen versehen sein.

Der Vorsprung kann insbesondere als eine rings um den Hohlraum umlaufende Rippe ausgebildet sein.

Weiters ist aus DE 10 2007 009 692 A1 eine Befestigung eines Unfallsensors an einer Wand bekannt, bei der ein Bolzen in einer elastisch ausgebildeten Hülse diese hinter einer Aussparung der Wand aufspreizend vertastet ist.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen schematischen Schnitt durch ein Kältegerät;
- Fig. 2: eine perspektivische Ansicht einer erfindungsgemäßen Spreizniete;
- Fig. 3: einen Schnitt durch die Spreizniete;
- Fig. 4: eine Draufsicht auf den Verdampfer des Kältegeräts aus Fig. 1;

- Fig. 5: einen Schnitt durch einen an einer Innenbehälter-Rückwand montierten Verdampfer gemäß einer zweiten Ausgestaltung der Erfindung; und
- Fig. 6: eine Rückansicht des Verdampfers aus Fig. 5.

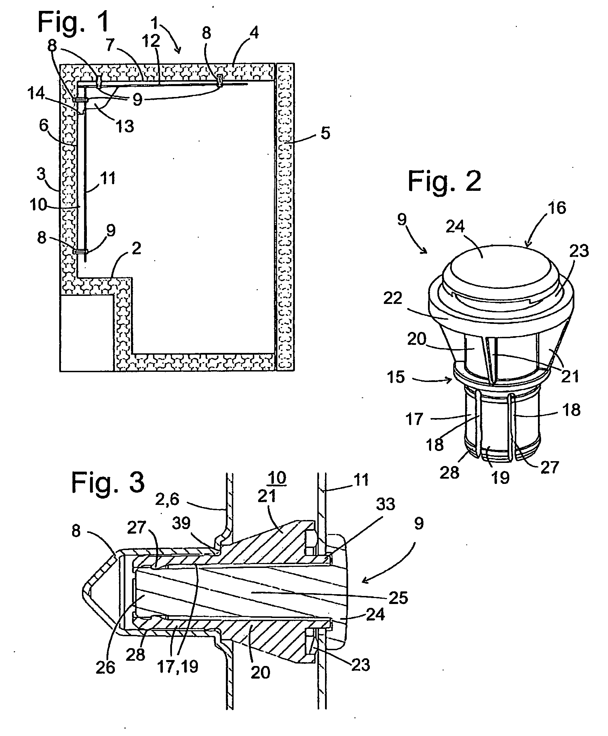

Fig. 1 zeigt einen Querschnitt durch ein Kältegerät mit plattenförmigen Einbauteilen. Ein Korpus 1 des Kältegeräts ist in herkömmlicher Weise aufgebaut aus einem aus Kunststoff einteilig tiefgezogenen Innenbehälter 2 und einer aus einzelnen Platten zusammengefügten Außenhaut 3, die zusammen mit Isoliermaterial 4 ausgeschäumte Wände des Korpus begrenzen.

Mit denselben Werkzeugen, die zum Tiefziehen des Innenbehälters 2 verwendet wurden, sind an verschiedenen Stellen der Wände des Innenbehälters, im hier gezeigten Fall an seiner Rückwand 6 sowie der Decke 7, Näpfe 8 angezogen. Jeder Napf 8 nimmt eine Spreizniete 9 auf. Die an der Rückwand 6 befestigten Spreiznieten 9 tragen einen von der Rückwand 6 durch einen Luftspalt 10 getrennten Plattenverdampfer 11. An der Decke ist mit Hilfe der Spreizniete 9 eine flache Schale 12 aus Kunststoff befestigt. Eine Mulde 13, die am hinteren Rand der Schale 12, angrenzend an die Rückwand 6, mittig angeordnet ist, nimmt ein in der Figur nicht sichtbares Gebläse auf. Das Gebläse ist vorgesehen, um Kaltluft aus dem Luftspalt 10 über einen Ansaugschlitz 14 zwischen dem Boden der Mulde 13 und der Rückwand 6 anzusaugen und zwischen der Schale 12 und der Decke 7 entlang zur Tür 5 zu führen.

Die Figuren 2 und 3 zeigen eine der Spreiznieten 9 in einer perspektivischen Ansicht bzw. in einem axialen Schnitt. Die Spreizniete 9 ist im Wesentlichen aus zwei aus Kunststoff spritzgeformten Teilen zusammengesetzt, einem rohrförmigen Gehäuseteil 15 und einem Stößel 16. Das Gehäuseteil 15 hat einen im Wesentlichen hohlzylindrischen Wurzelabschnitt 17, in dem durch Schlitze 18 in zwei gegen die Längsachse der Spreizniete 9 versetzten parallelen Ebenen zwei biegsame Zungen 19 freigeschnitten sind, sowie einen Schaft 20, der, versteift durch radial abstehende Streben 21, einen Ringflansch 22 trägt. In eine umlaufende Nut des Ringflansches 22 ist ein elastisch verformbarer O-Ring 23 eingefügt.

Der Schaft hat einen etwas größeren Außendurchmesser als der Wurzelabschnitt; beide sind voneinander durch einen Bund 39 abgesetzt. Wenn der Wurzelabschnitt 17 des Gehäuseteils 15 wie in Fig. 3 gezeigt in einen Napf 8 eingesteckt ist, bildet der Bund 39 einen Anschlag, der die Eindringtiefe des Gehäuseteils 15 begrenzt.

Der Stößel 16 hat einen flachen Kopf 24 und einen davon abstehenden zylindrischen, an seiner vom Kopf 24 abgewandten Spitze geringfügig verbreiterten Stift 25. Im montierten Zustand der Fig. 3 ist die verbreiterte Spitze 26 des Stifts 25 hinter einer einwärts gerichteten umlaufenden Rippe 27 des Wurzelabschnitts 17 verrastet. Der freie Querschnitt des Wurzelabschnitts 17 ist vor der Rippe 27 so groß, dass der Stößel 16 in den Durchgang des Gehäuseteils 15 bis zur Rippe 27 ungehindert vordringen kann, ohne den Wurzelabschnitt 17 zu verformen. Erst beim Passieren der Rippe 27 spreizt der Stößel 16 dessen Zungen 19 auseinander. Hinter der Rippe 27 ist der freie Querschnitt des Wurzelabschnitts 17 kleiner als davor, so dass die Zungen auseinandergespreizt bleiben, wenn der Stößel 16 hinter der Rippe 27 einrastet. Dadurch drückt sich eine außen an den Wurzelabschnitten 17 umlaufende flache Rippe 28 in die Wände des Napfs 8 ein und erzeugt einen Reibschluss, vorzugsweise sogar einen Formschluss zwischen dem Wurzelabschnitt 17 und dem Napf 8.

Die Länge des Stifts 25 ist an die Dicke des zu befestigenden Teils des Plattenverdampfers 11 oder der Schale 12, angepasst so dass, wenn die Spitze 26 an der Rippe 27 verrastet ist, das Teil 11 oder 12 zwischen dem Kopf 24 des Stößels und dem elastisch verformten Ring 23 eingeklemmt ist. So ist das Teil 11 oder 12 in Richtung der Längsachse der Spreizniete 9 spielfrei fixiert.

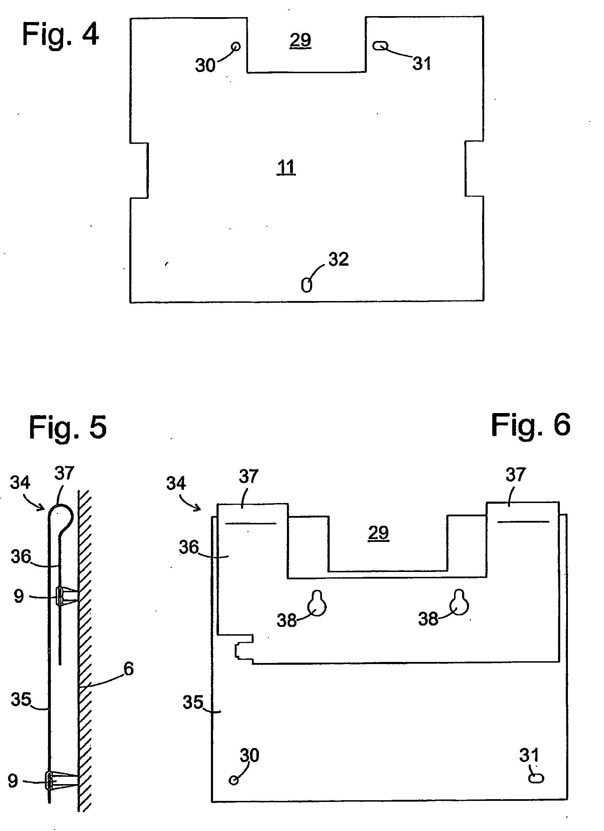

Ob das Teil 11 oder 12 auch senkrecht zur Längsachse der Spreizniete 9 spielfrei fixiert ist, hängt von der Form eines Lochs des Teils 11 bzw. 12 ab, durch die sich die Spreizniete 9 erstreckt. Fig. 4 zeigt eine Draufsicht auf den Plattenverdampfer 11 gemäß einer ersten Ausgestaltung der Erfindung. Beiderseits eines Ausschnitts 29 am oberen Rand des Verdampfers 11, der vorgesehen ist, um die Mulde 13 aufzunehmen, sind Löcher 30, 31 für die Spreiznieten 9 angeordnet. Ein drittes Loch 32 ist mittig nahe am unteren Rand des Verdampfers 11 platziert. Der Durchmesser des kreisrunden Lochs 30 entspricht im Wesentlichen exakt dem Außendurchmesser eines kurzen ringförmigen Stutzens 33 (siehe Fig. 3) des Gehäuseteils 15, der über den Ringflansch 22 hinaus gegen den Kopf 24 des Stößels 16 vorspringt. Der Stutzen 33 gibt somit eine Montageposition für den Verdampfer 11 exakt vor, wenn nur das Gehäuseteil 15 in seinen Napf 8 eingesteckt, es aber noch nicht durch Einführen des Stößels 16 darin am Innenbehälter 2 verriegelt ist. Die Löcher 31, 32 sind Langlöcher, deren Längsrichtung im Wesentlichen mit der Richtung einer gedachten Verbindungslinie zwischen Ihnen und dem Loch 30 zusammenfällt. Aufgrund des Spiels zwischen den Langlöchern 31, 32 und den Stutzen 33 der in sie eingreifenden Spreiznieten 9 können Fertigungstoleranzen, insbesondere solche, die die Platzierung der Löcher 30, 31, 32 und der Näpfe 8 betreffen, ausgeglichen werden. Wenn sich bei Temperaturänderungen der Innenbehälter 2 und der Verdampfer 11 unterschiedlich stark ausdehnen oder zusammenziehen, so führt dies zu einer Verschiebung der Spreiznieten 9 in den Langlöchern 31, 32, wodurch die Entstehung von thermischen Spannungen im Korpus 1 vermieden wird.

Während der Verdampfer 11 der Fig. 4 eine einzige und sich in einer einzigen Ebene erstreckende Platte umfasst, hat der in Fig. 5 im Schnitt gezeigte Verdampfer 34 zwei planare Plattenabschnitte 35, 36, die an ihren oberen Rändern durch rund gebogene Brücken 37 verbunden sind. Um die beiden Plattenabschnitte 35, 36 parallel zur Rückwand 6 zu fixieren, sind Spreiznieten 9 mit unterschiedlich langen Schäften vorgesehen. Für die kurzen Spreiznieten sind in dem kleineren Plattenabschnitt 36 an einer durch den davor liegenden Abschnitt 35 verdeckten Stelle schlüssellochförmige Löcher 38 geschnitten, deren unterer, weiter Bereich groß genug ist, um den Kopf 24 der Spreiznieten 9, nicht aber den Ringflansch 22 passieren zu lassen. Um den Verdampfer 34 zu montieren, werden zunächst in der Rückwand 6 die Gehäuseteile 15 aller Spreiznieten 9 gesetzt, und in die Gehäuseteile 15 der oberen, kurzen Spreiznieten werden die Stößel eingeführt. Anschließend wird der Verdampfer 34 an diesen oberen Spreiznieten so aufgehängt, dass die Stutzen 33 der unteren Spreiznieten 9 in ein kreisrundes Loch 30 und ein horizontales Langloch 31 der unteren Wand des Plattenabschnitts 35 eingreifen. Mit dem Einführen der Stößel 16 in die Gehäuseteile 15 der unteren Spreizniete 9 ist die Montage des Verdampfers 34 abgeschlossen.

## Patentansprüche

1. Kältegerät, insbesondere Haushaltskältegerät, mit einer Wand mit einer Aussparung und mit einem durch wenigstens eine Spreizniete gehaltenen Einbauteil (11, 12), wobei die Spreizniete ein rohrförmiges Gehäuseteil (15) hat, das einen Schaft (20) und einen Wurzelabschnitt (17) umfasst, und einen zum Aufspreizen des Wurzelabschnitts (17) in das Gehäuseteil (15) einführbaren Stößel (16) aufweist, wobei ein Kopf (24) des in das Gehäuseteil (15) eingeführten Stößels (16) einem vom Wurzelabschnitt (17) abgewandten Ende (22) des Schafts (20) beabstandet gegenüberliegt, wobei der Wurzelabschnitt (17) einen in einen inneren Hohlraum gerichteten Vorsprung (27) aufweist, der Stößel (16) an dem Vorsprung (27) verrastet ist und beim Passieren des Vorsprungs (27) diesen zur Seite drängt, so dass der Vorsprung (27) für eine zur Verankerung der Spreizniete in der Aussparung benötigte Aufspreizung des Wurzelabschnitts (17) sorgt.

2. Kältegerät nach Anspruch 1, **dadurch gekennzeichnet, dass** zwischen dem Schaft (20) und dem Wurzelabschnitt (17) ein Bund (39) gebildet ist.

3. Kältegerät nach Anspruch 1 oder 2, **dadurch gekennzeichnet, dass** ein Ringflansch (22) an einem vom Wurzelabschnitt abgewandten Ende des Schafts (20) gebildet ist.

4. Kältegerät nach einem der vorhergehenden Ansprüche, **dadurch gekennzeichnet, dass** an einem vom Wurzelabschnitt (17) abgewandten Ende (22) des Schafts (20) ein elastisches, vorzugsweise schwingungsdämpfendes Element (23) angeordnet ist.

5. Kältegerät nach einem der vorhergehenden Ansprüche, **dadurch gekennzeichnet, dass** der Schaft (20) durch außen abstehende Rippen (21) versteift ist.

6. Kältegerät nach einem der vorhergehenden Ansprüche, **dadurch gekennzeichnet, dass** der Vorsprung eine umlaufende Rippe (27) ist.

## Claims

1. Refrigerator, in particular household refrigerator, having a wall with a recess and with a built-in part (11, 12) held by at least one expanding rivet, wherein the expanding rivet has a tubular housing part (15) which comprises a shaft (20) and a root section (17), and has a plunger (16) which can be introduced into the housing part (15) in order to spread apart the root section (17), wherein a head (24) of the plunger (16) introduced into the housing part (15) lies opposite and spaced apart from an end (22) of the shaft (20) facing away from the root section (17), wherein the root section (17) has a projection (27) directed into an interior hollow space, the plunger (16) is latched on the projection (27) and in passing the projection (27) pushes it aside, so that the projection (27) ensures that the root section (17) is spread apart, as is required to anchor the expanding rivet in the recess.

2. Refrigerator according to claim 1, **characterised in that** a collar (39) is formed between the shaft (20) and the root section (17).

3. Refrigerator according to claim 1 or 2, **characterised in that** a ring flange (22) is formed on an end of the shaft (20) facing away from the root section.

4. Refrigerator according to one of the preceding claims, **characterised in that** an elastic, preferably vibration-damping element (23) is arranged on an end (22) of the shaft (20) facing away from the root section (17).

5. Refrigerator according to one of the preceding claims, **characterised in that** the shaft (20) is braced by externally protruding ribs (21).

6. Refrigerator according to one of the preceding claims, **characterised in that** the projection is a circumferential rib (27).

## Revendications

1. Appareil frigorifique, en particulier appareil frigorifique ménager, avec une paroi dotée d'un évidement et avec une pièce de montage (11, 12) maintenue par au moins un rivet à expansion, dans lequel le rivet à expansion possède une partie de carcasse tubulaire (15), laquelle englobe un corps (20) et une section racinaire (17), et un pilon (16) insérable dans la partie de carcasse (15) pour écarter la section racinaire (17), dans lequel une tête (24) du pilon (16) inséré dans la partie de carcasse (15) est opposée et écartée d'une extrémité (22) du corps (20) éloignée de la section racinaire (17), dans lequel la section racinaire (17) présente une saillie (27) dirigée dans un creux intérieur, le pilon (16) s'encliquète sur la saillie (27) et se pousse sur le côté après avoir passé la saillie (27), de sorte que la saillie (27) assure un écartement de la section racinaire (17) nécessaire à l'ancrage du rivet à expansion dans l'évidement.

2. Appareil frigorifique selon la revendication 1, **caractérisé en ce qu'**un épaulement (39) est constitué entre le corps (20) et la section racinaire (17).

3. Appareil frigorifique selon la revendication 1 ou 2, **caractérisé en ce qu'**une bride annulaire (22) est constituée sur une extrémité du corps (20) éloignée de la section racinaire.

4. Appareil frigorifique selon l'une des revendications précédentes, **caractérisé en ce qu'**un élément (23) élastique, de préférence réfrénant les vibrations, est disposé sur une extrémité (22) du corps (20) éloignée de la section racinaire (17).

5. Appareil frigorifique selon l'une des revendications précédentes, **caractérisé en ce que** le corps (20) est renforcé par des renforts (21) extérieurs.

6. Appareil frigorifique selon l'une des revendications précédentes, **caractérisé en ce que** la saillie est un renfort périphérique (27).
